# EUROPEAN PATENT APPLICATION

(11) **EP 3 693 095 A1**
(43) Date of publication of application: **12.08.2020**
(21) Application number: 20156606.4
(22) Date of filing: 11.02.2020
(51) Int. Cl.: B08B 9/08, B65G 21/20

(54) **AN ADJUSTABLE SIDEWALL OF THE INNER WASH AREA OF THE CRATE WASHING LINE FITTED WITH WATER JETS**

(30) Priority: 11.02.2019 CZ 20190074
(71) Applicant: WashZone s.r.o., 11000 Praha (CZ)
(72) Inventor: Srp, David, 28912 Trebestovice (CZ); Kalina, Luká, 66902 Dyjákovicky (CZ)
(74) Representative: Sedlák, Jirí

(57) **Abstract**

An adjustable side wall (1) of the internal wash area (21) of the washing line (20) for crates (25) and boxes equipped with water jets (10) is built in or integrated into the washing lines (20) for crates (25) or boxes. The adjustable side wall (1) is located in the internal wash area (21) of the washing line (20) parallel to the conveyor travel axis (22), parallel to the opposite side wall of the washing line (20), perpendicular to the conveyor (22) surface. The adjustable side wall (1) is connected through a adjusting system (6) to the supporting frame (2) and is adjustable in the direction perpendicular to the conveyor travel axis (22). Due to the adjustable side wall (1), it is possible to narrow or expand the wash area (21) of the washing line (20) to the desired width corresponding to the width of the crate (25) to be washed.

## Description

### Field of the Technology

Crate washing lines

### State of the Art

Important parameters for washing lines are the quality of washing and smoothness of operation. Both parameters largely depend on the settings of the washing line, but are also largely influenced by the parameters and dimensions of the line itself. Shaping the wash area of the line is important when washing crates or boxes of various shapes and sizes. As a rule, the wash area of the line is dimensioned for the largest crates which are guided through the washing line by means of guide rails onto which they fit closely at small distances from each other. When smaller crates are washed that do not fit closely onto the guide rails of the washing line, unpredictable movements of the crates inside the wash area occur, and often the smaller crates are jammed inside the wash area of the line.

At present, the washing lines for crates or boxes are realized in several ways. One is to carry the crates by means of pins, wherein the pins are located on one or more chains extending longitudinally through the entire washing line, which carry the crates or boxes and pull them through the entire washing line. The crates are thus pulled in the direction of travel, but they are not fixed in the washing line from the sides or from above. Pressurized water often tosses the crate sideways and up/down in the wash area of the line, wherein it depends on the height of the wash area or wash area bounded by the guide rails, height of the crate and height of the guide pin, whether the crate is still pulled through the washing line by the pin or whether it can slip from the pin when lifted by pressurized water and jam in the wash area of the line. Washing lines realized in this way are highly liable to failure and the operation of such washing line must be under constant supervision.

Another way of realizing the washing lines is to guide the crates through the washing line by means of fixed side plates, whereby the crate is secured in the direction of travel by solid side plates or side guide rails. While the side plates partially fix the crate from sides, the crate has the freedom to move up and down, and with the pressurized water jets, the crate is repeatedly lifted up and pressed against the conveyor or ceiling of the wash area of the line, which often results in jamming of the crate in the line or poor washing due to uneven pressure of the water jets. In addition, washing the crates from sides at the point of contact with the side plate is very limited.

The existing washing line designs do not allow efficient attachment of crates or boxes to be washed in a fixed position, and so often they are tipped over or twisted by action of the pressurized water, resulting in either poor washing of the crate and/or jamming in the washing line, which results in a technological failure of the washer.

Factors influencing technological failures
- Different height in a row of consecutive crates affects the jet pressures on individual crates
- Different jet pressures from different angles on a large crate with different crate height when passing through the washing line
- Different jet pressures from different angles on a small crate with different crate height when passing through the washing line The factor is multiplied by the fact that small crates move in different distance from the jets - in the middle or along either side of the track. Thereby a different water pressure hits it from different sides at different angles, which in turn makes twisting of the crate and its jamming in the track easier.
- Crates are collapsible - when crates jump off the pins and are under water pressure from the side jets, that is on the shorter side of the crate, they collapse into the base platform and get jammed on the frame, wall of the washer, they are twisted or turn over by the water pressure, causing a technological failure.
- The crate has no possibility of being firmly fixed all the way through the washing line and it is not possible to wash each individual crate efficiently under high pressure.
- At higher speeds, it is not possible to efficiently wash the long side of the crate only by passing under the jet so that the water pressure disrupts the paper label.
- At higher speeds, water usually hits the long side of the crate only by reflection, due to the high speed of the crate being carried and the fact that height of the crates changes when the low one runs immediately behind the high one, i.e. the high crate causes an umbrella effect for the low crate.
- With different crate heights, it is not possible to efficiently wash the long side of the crate by passing only (at certain angles, the jet does not cover the entire crate wall with its angle, crate speed and pressure to ensure the most effective removal of the label from the long side of the crate).
- Washing crates from underneath - it is almost impossible to wash them under higher pressure; due to pressure the crates are lifted up and turn over or jump off the trailing pins and the crate collapses or gets jammed on the washer installation. Crates cause a problem mainly where the contact surfaces of the crate pass through the stream from the jet.
- Low washing efficiency of the standard **Main Wash section at pressure of 6 bar** If all crate heights are in production, all crates that are smaller than the free interior of the washing line are lifted up and levitated or tipped over due to water pressure. These are generally crates lower than 220 mm due to the height of the pin above the chain (usually 80 mm) and the total free wash area, which is usually 300 mm high
- Maximum height to the upper stop of the crates (space from the chain to the upper stop is usually 300 mm)
- 300 - 80 = 220 mm, i.e. crates 221 to 300 mm high will be fixed, while other crates become unstable under the water pressure, slide off the pin and begin to destabilize the entire system.

Washing with a standard 20 bar high-pressure module is solved by a fixed jet system with hoses connected to the jets attached from the side to the washer frame. From above, the crates are rinsed using a shaft terminated by a jet head and a motor located on the top outside of the washer. Washing efficiency cannot be increased; higher oscillation cannot be achieved; jets do not have a proper angle to cover the whole side of the crate; moreover, there is a risk of electric shock, since the jets are motor-driven, with the motor shaft extending through the wall of the washer; and moreover, there is a risk that the simmer-ring seal ruptures and the pressurized water leaks into the motor.

Only 4 jets from above always wash two crates at a time (2 jets per crate in the direction and 2 jets per crate in the opposite direction - the second long wall of the crate)
WP HP washes 1 container at a time with all jets when passing through (if the crate gets in the centre of the jet system, all jets from all sides and directions act on it, thus utilizing the greatest potential for proper crate washing.

When washing small crates, the jets on either or both sides are more distant from the crate than when washing large crates, where the jets are 100 to 150 mm from the crate, due to the fixed position of the jets from the side.

The standard washing process is carried out in such a way that by the input conveyor the crate is transported to the washer upside down. From the inside, the crate is caught in the washer by the pins of guide chains or conveyor. The pins on the washer chain ensure that the crate does not collapse when passing through the washer, even if the crate is not closed in the locks.
- When passing through the washer, the crate is sprayed with water, which is distributed by means of pumps and the jet system. The frame inside the washer, in which several sets of jets are installed one above the other or next to each other and mostly with added detergent/disinfection, is divided into the Pre-wash, Main wash, Disinfection Rinse and Clean Water Rinse sections. These jet sections are fixed in the washer, wherein the jet system exerts pressure of 3, 6 or up to 20 bar on the crate or certain point on the crate from different sides and angles from above, from below and from both sides along the washer guide so that the crate can be washed without lifting, tipping over, collapsing or rotating in the washer. Furthermore, even when small crate is passing through, the jets are on one or both sides more or less distant from the crate, i.e. acting again on the crate or certain point on the crate by different pressures.
- After washing and rinsing with clean water, the crate is taken out from the washer onto the outlet conveyor.
- Each crate guiding line includes two to three guide chains, depending on whether the washer washes small crates of 400 ^{∗} 300 mm or large crates of 600 ^{∗} 400 mm.
- If the washer washes small type of crates, a side pull-out guide is added next to the chain along its entire length, which rises about 50 mm above the chain level when washing small crates to form a side plate to prevent small crates from slipping off the line and causing jamming - clogging the washer or breaking the chain.
- In the case of washing large crates, this side plate is fixed on both sides, stationary, installed 50 mm above the level of the washer chain.
- In the interior of the washer there is an adjustable guide suspended against the chain on the ceiling of the wash area along the entire length of the washer to ensure the stability of crates so that the crates do not jump off the chain.
- Each crate on the guide chain (long side of the crate) has a gap of 100 to 150 mm between the next crate where the same amount of water of the same pressure falling on the long wall of the crate at higher speeds cannot be guaranteed.

### Length of a standard washer used for this calculation is 18.6 m

Standard washer speed is 0.3 m/s = 1,800 crates/hour; label washing efficiency is around 30 %. The high-pressure module washer speed is 0.85 m/s = 2,600 crates/hour; label washing efficiency is around 50 %.

Labels are attached to the shorter side of the crates. This side must therefore be subjected to the most powerful and efficient washing.

As a standard, large crates with a plan size 600 ^{∗} 400 mm and height from 20 to 300 mm, small crates with a plan size 400 ^{∗} 300 mm and height from 20 to 300 mm are washed.

**Flow rates:**

| | |
|---|---|
| Standard washer | Flow rate 95 m³/h = 25 l/s |
| HP module washer | Flow rate 15 m³/h = 4 l/s |

**Jets for the Main Wash section**

| | |
|---|---|
| Standard washer | Flow rate 95 m³/h = 6 jets on each side |
| HP module washer | Flow rate 15 m³/h = 5 jets on each side |

### Existing fixation of crates

The crate can be fixed from above to prevent it from jumping off the pin, but only when washing one single predetermined crate height and/or fixing only the highest crate of a row of consecutive crates of different heights, typically crates of 300mm height. Crates smaller than the difference between the maximum space for the crate from the chain/ conveyor to the upper stop and the pin height (here 300 mm - 80 mm = 220 mm) are lifted or tipped over by the water pressure. When the crate levitates above the pin due to the water pressure, the water pressure from the side locks it and the crate falls back, gets stuck or breaks the chain.

Existing crate washers cannot fix any lower crates than the set maximum height, wherein the highest crates are fixed with rigid guide rails and the lower crates are not fixed from above at all.

Current systems do not adjust the distance of the jets with pressurized water in the case of washing small crates and the jets remain in a fixed position for washing large crates in the washer interior, usually 20 cm farther from one side or 10 cm farther from both sides if the crate is centered. This causes poor cleaning of one or both sides of the crate. Poor washing of the crates must then be solved by manual washing, which extends the entire washing process.

Unwanted movements and change of position of crates and their jamming in the wash area occurs mainly in the Main Wash section, when the crates are subjected to high water pressures which cause their movement.

### Description of the Invention

Improvement of the quality of industrial washing of smaller or narrower crates is solved by approaching the pressure water jets/nozzles located on the internal side walls of the wash area of the washing line to the crates to be washed, wherein at least one side wall is adjustable. The adjustable side wall brings the pressure water jets to the same distance from the small crates as when washing large crates. This ensures the same quality of washing of the sides of both large and small crates, the width of which usually varies by 20 cm. The distance of water jets from the crates is crucial for the quality of washing the crate sides, as it is necessary to completely remove the stickers and labels of the exhibited goods and prepare the crate for new use. Since the washing is carried out automatically, the pressure water is used, the force of which decreases rapidly with the distance from the object being washed. Especially for high-pressure washing, the emphasis is on the effective use of water pressure. Bringing the high-pressure water jets closer to the crate to be washed thus makes the entire high-pressure washing process more effective. The water jets can be brought directly to the crate to be washed or at any distance from the crate, which is limited only by the width of the wash area of the line. In addition, due to the positioning of the side wall or walls, the force of water jets acts symmetrically and thus does not change the position of the crates by lifting up or jamming the crate in the wash area of the washer. Approaching the adjustableside walls to the crate to be washed also limits the lateral movements of the crate, which also increases the washing efficiency.

At least one side wall of the interior wash area of the washing line can be positioned. The adjustable side wall is preferably rectangular in shape, preferably assembled from stainless steel profiles, positioned vertically in the internal wash area of the washing line, parallel to the conveyor travel axis and perpendicular to the conveyor surface. When positioning the side wall, perpendicular to the conveyor travel axis, parallel to the opposite side wall of the internal wash area of the washing line, the side walls are getting nearer to or farther from each other according to the size of the crate. Thus, the wash area is narrowed or expanded depending on the size of the crates to be washed, and since the adjustable side wall is fitted with water jets, the jets are in close proximity to the washed crates, making maximum use of water pressure. The adjustable side wall or walls are preferably located in the internal wash area of the washing line at a height above the guide pins of the conveyor so as to be able to change the position of adjustable side walls also over the row of guide pins thereby narrowing the wash area of lines sized for large crates with a conveyor having several rows of carrier pins.

The adjustable side wall or walls must be positionably fixed in the internal wash area of the washing line. It is fixed to a supporting frame, which may be a reinforcing frame of the internal wash area of the washing line, or a built-in supporting frame firmly attached to the reinforcing frame of the washer. The supporting frame ensures precise fixing and precise changing of position of the adjustable side wall or walls. The adjustable side wall or walls are positionably fixed to the supporting frame by means of a adjusting system. The adjusting system allows controlled position change of the side wall or walls. Preferably, two opposing side walls fitted with water jets are mounted on the adjusting system.

The adjusting system may be realized as a guide or arresting system. The guide system consists of a guide structure and a movable system; wherein the guide structure is preferably a rail or bar, and the movable system is preferably a counter-rail, wheel, hook. The side wall position changes continuously with the guide system. In contrast, the arresting system may be a dismountable joint or a locking pin/pins with a pin hole/holes. The side wall position changes in steps with the arresting system.

**The guide system** serves to continuously change the position of the adjustable side wall; it consists of a guide structure and a movable mechanism, it is located horizontally, perpendicular to the conveyor travel axis, wherein the movable mechanism is located on the adjustable side wall or walls and the guide structure is located on the supporting frame. The movable mechanism preferably consists of a profile mounted on a guide structure, which is preferably a rail, preferably made of C-profile, or consists of a counter-rail mounted on a rail, or consists of suspension wheels mounted on a rail, or consists of a suspension hook mounted on a rail. In the event that the adjustable side wall is not equipped with any linear drive and the rail and the profile mounted thereon serve as the guide system, the guide system is provided with a dismountable joint at the point of contact of the rail and the mounted profile for fixing in the desired position. Or, the guide structure consists of a nut and the movable mechanism consists of a threaded rod or the guide mechanism consists of at least one piston. The threaded rod is attached to the adjustable side wall, passes through the thread in a fixed side wall of the washer, and is preferably terminated with a loop. The movable mechanism preferably consists of a sliding bar connected to a adjustable side wall and extending through the side wall of the washing line, which serves as a guide structure, out of the washing line and secured by a latch in the desired operating position.

Thus, the adjustable side wall is moved by means of a movable mechanism, preferably guided on a rail, at one horizontal height, perpendicular to the conveyor travel axis, thereby narrowing and widening the internal wash area. A piston is preferably used as a guide system where one of its static/movable parts is attached to the supporting frame and the other of its static/movable parts is attached to the adjustable side wall.

The linear horizontal drive of the position change of the adjustable side wall or walls with a guide system is mechanical, pneumatic, hydraulic or electromechanical. Preferably, the mechanical linear horizontal drive is realized manually by a sliding bar connected to the adjustable side wall and extending through the side wall out of the washing line and secured by a latch in the desired operating position. Preferably, the bar may have a length mark corresponding to the size of the crates to be washed, or narrowing of the wash area by sliding in the adjustable side wall. The more the bar is inserted in the washing line, the more the adjustable side wall will be distant from the wall of the washing line, the more the internal wash area of the washing line will be narrowed and the smaller the crates that can be effectively washed in the washing line. The role of the drive can also be played by the threaded rod, which also act as a movable mechanism. The threaded rod, on one side slidably mounted to the adjustable side wall, is led through the threaded hole in the fixed side wall out of the washer and is rotated by the loop on the other side, thereby changing the position of the adjustable side wall. Or, the threaded rod is firmly attached to the adjustable side wall, is led through the hole in the fixed side wall out of the washer and there is a nut mounted on it over a sliding washer, wherein the tightening of nut against the outer wall of the washer extends the threaded rod through the wall out of the washing line, thereby moving the adjustable side wall away from the opposite side wall and expanding the internal wash area.

The role of the pneumatic or hydraulic drive can also be played by a piston, which also acts as a guide mechanism. The change of position of the adjustable side wall, placed on a rail or without a rail, is semi-automatically or automatically performed by a piston. The piston is positioned horizontally, perpendicular to the conveyor travel axis. A hydraulic or air piston allows the positioning side wall to be brought closer to the opposite side wall of the internal wash area or the opposite positioning side wall, or allows the side walls to move away from each other. As the side walls move apart, the width of the wash area of the washing line is widened and wide crates can be washed. As the side walls are brought closer together, the wash area becomes narrower and narrow containers can be washed.

The change of position of the adjustable side wall or walls with a guide system, whether manually, automatically or semi-automatically, can be made for any crate width.

As already mentioned, **the arresting system** allows for a step change of position of the adjustable side wall. The arresting system is realized by a dismountable joint, preferably by screws and nuts, or by a locking pin/pins and a locking hole/holes. Preferably, a plurality of steel pins is used that are located on the supporting frame horizontally, perpendicular to the conveyor travel axis, facing upward from the base. The adjustable side wall then has a compatible arresting system, namely a panel with a locking hole or multiple holes, where the adjustable side wall is hanged - put through the hole or holes in the positioning side wall onto a pin or pins on the supporting frame. It is also possible to use an arresting system where one or more pins in a row are positioned horizontally on the adjustable side wall, perpendicular to the conveyor travel direction, wherein the pins point downwards from the base and the supporting frame has a row of holes into which the pin or pins of the adjustable side wall are hanged. For each adjustment of the width of wash area of the washing line, the adjustable side wall or walls are unhooked from the pin or pins and shifted to another pin in a row or to another hole so that the width of the wash area corresponds to the width of the crates to be washed. The change of position of the adjustable side wall or walls with the arresting system is adjustable only for the specified widths of the wash area, depending on the location of the arresting system elements.

It is important that in the working position adapted to the size of the crates to be washed, the adjustable side wall or walls are properly fixed to prevent them from accidentally changing their position while the washing line is running. In the case of the adjustable side wall with arresting system, the arresting system itself provides this fixation. In the case of the adjustable side wall with guiding system, it is preferred to use a locking system to secure the working position of the adjustable side wall. The locking system is preferably realized by at least one locking screw. The locking screw is preferably situated at the point of contact of the adjustable side wall and the supporting frame or reinforcing frame of the washer. Tightening the locking screw will lock the sliding side wall or walls in place, in the working position.
The role of the locking system can also be played by a piston or a threaded rod, which also act as a movable mechanism and a drive.

As already mentioned, the adjustable side walls are fitted with jets. The jets can be located on the adjustable wall one at a time, solitarily, wherein a pressurized water supply hose is brought to each jet or in a jet body/bodies provided with a hollow space and a supply hose/hoses, wherein the jet body has more jets than supply hoses and the pressurized water is distributed from the supply hoses through the hollow space of the jet body to the jets.
Adjustable side walls fitted with water jets are built into the internal wash area of existing washing lines, or the adjustable side walls are made as integrated into newly produced washing lines.

### Summary of presented drawings

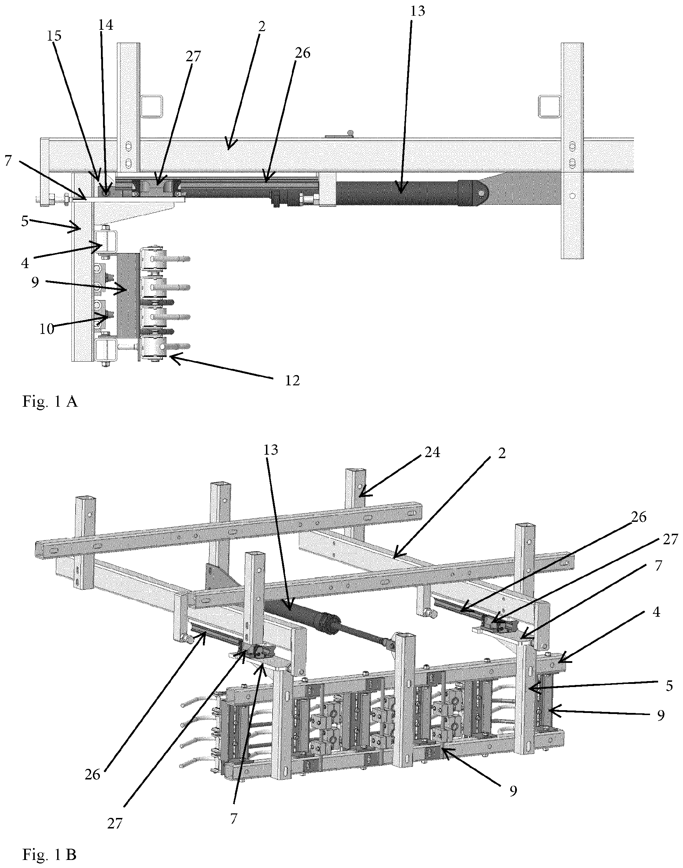

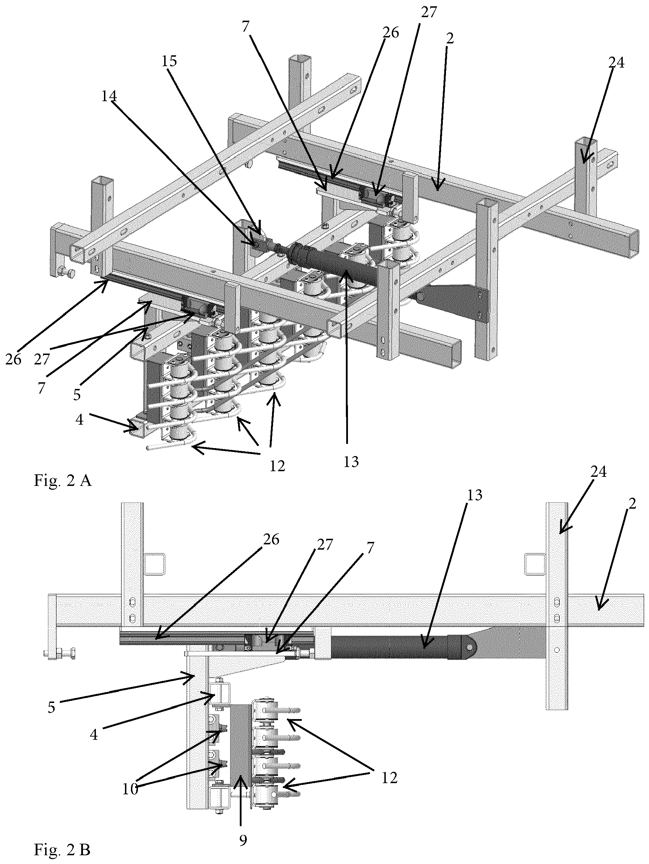

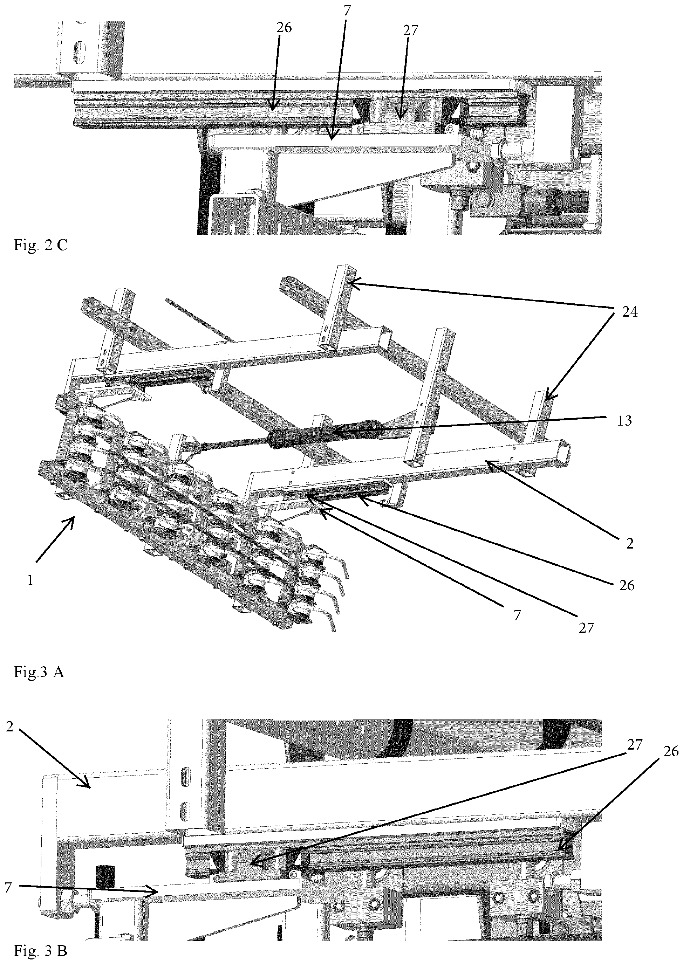

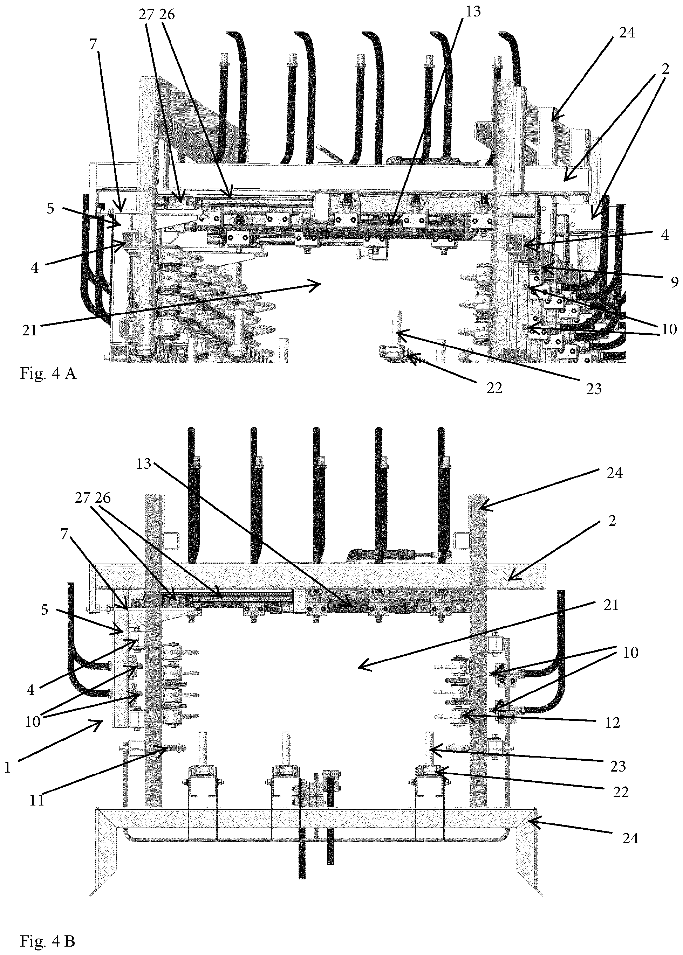

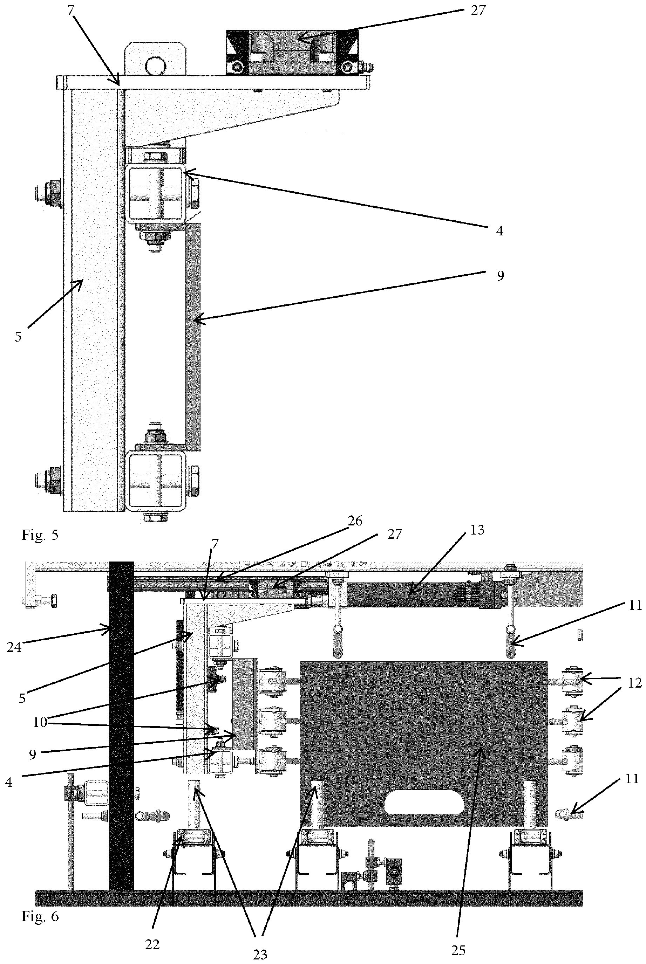

- Fig. 1:: A supporting frame 2 with one adjustable side wall 1 with drive and lock by a piston 13, with a positioning mechanism 6 by a rail and a counter-rail, fitted with flexible segments 12 and high pressure water jets 10;
A: Front view
B: Side view
- Fig. 2:: A supporting frame 2 with one adjustable side wall 1 with drive and lock by a piston 13, with a positioning mechanism 6 by a rail and a C-profile, fitted with flexible segments 12 and water jets 10; the adjustable side wall 1 moves to narrow the wash area 21;
A: Side view
B: Front view
C: Detail of the adjusting system 6, a guide system 17 - rail on the supporting frame 2, C-profile on the adjustable side wall 1, the adjustable side wall 1 moves to narrow the wash area 21
- Fig. 3:: A supporting frame 2 with one adjustable side wall 1 with drive and lock by a piston 13, with a positioning mechanism 6 by a rail and a C-profile, fitted with flexible segments 12 and high pressure water jets 10;
A: Bottom view
B: Detail of the adjusting system 6, a guide system 17 - rail on the supporting frame, C-profile on the adjustable side wall 1, the adjustable side wall 1 moves to expand the wash area 21
- Fig. 4:: Location of the adjustable side wall 1 in the washing line 20;
A: Rear view from the side
B: Front view
- Fig. 5:: The adjustable side wall 1 with the counter rail, fitted with a bracket 9, front view
- Fig. 6:: Location of the adjustable side wall 1 with the piston 13 above the carrier pin 23 of the conveyor 22, fitted with flexible segments 12, water jets 10, narrow adjustment for narrow crates 25

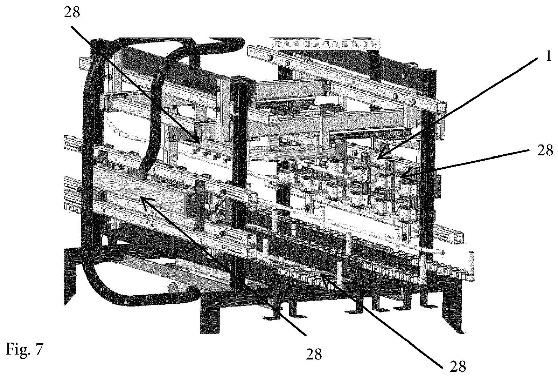

- Fig. 7:: Location of the adjustable side wall 1 fitted with four jet bodies 28 in the washing line 20

### Examples of the invention Execution

### Example 1

### Adjustable side wall construction

The adjustable side wall 1 is made of stainless steel, screwed together from closed steel profiles joined at the corners with self-locking nuts, which ensure constructional accuracy for the adjusting system 6 of the linear guide. The adjustable side wall 1 is formed by two horizontal parallel supporting profiles 4. The supporting profiles 4 are rigidly connected with supporting joints 5, which are arranged perpendicular to the supporting profiles 4 and are screwed together with the supporting profiles 4. Supporting joints 5 are connected to the base 7 of the adjusting system 6 to the shape of T or inverted L. The adjusting system 6 is located on the base 7 of the adjusting system 6 and consists of a locking hole, locking pins, profiled rail, suspension sliding wheel, stop of the piston 13, hook, C-profile. The base 7 of the adjusting system 6 also has a locking screw 8.

The supporting profiles 4 are fitted with vertical brackets 9 with spacing 5 to 20 cm, which are open profiles with grooves and/or rods. Water jets 10 or variable parts of the adjustable side wall 1 such as skids 11 or flexible segments 12 are mounted on the brackets 9.

The supporting frame 2 is built-in and is made of stainless steel, screwed together from closed steel profiles joined at the corners with self-locking nuts, which ensure constructional accuracy for linear guide. The supporting frame 2 is formed by beams 3 perpendicular to each other, wherein the supporting frame 2 has the shape of a regular quadrilateral and can additionally be reinforced in one or the other direction by a reinforcing beam. The supporting frame 2 has a adjusting system 6 compatible with the adjusting system 6 located on the adjustable side wall 1. The compatible adjusting system 6 on the supporting frame 2 may be a panel with holes for screwing with a hole in the base 7 of the adjusting system 6 of the sliding side wall 1, or a panel with locking pins or locking holes to be mounted on the base 7 of the adjusting system 6, or a profiled rail compatible with the profiled rail or suspension wheel located on the adjustable side wall 1 or a profile for attaching a hook or pin 14 of the piston 13.

### Example 2

### Installation of the built-in sliding side wall, arresting system

The wash area 21 of the tunnel-like washing line 20 is reinforced by stiffeners, crossbars and the upper reinforcement strip, which are an integral part of the washing line 20. If this is not the case, these stiffeners are installed in the wash area 21 of the washing line 20 prior to the installation of the adjustable side wall 1.

The installation of the adjustable side wall 1 is preceded by the installation of an adjusting frame. The adjusting frame is placed in the wash area 21 of the washing line 20 on the upper surface of the conveyor 22 and is centered relative to the conveyor 22 travel axis. The adjusting frame, which is connected at the frame mounting point with screws, is designed to measure and attach the built-in adjustable side wall 1 from the 'zero point', i.e. from the conveyor 22 or from the top of the carrier pin 23 of the conveyor 22. In this case, the reinforcing frame 24 serves as a supporting frame 2.

After the adjusting frame has been mounted, the adjustable side wall 1 is placed on its upper surface without fitting the brackets 9 for water jets 10 or other variable components. The adjustable side wall 1 is attached to the supporting frame 2 or the reinforcing frame 24 by means of a adjusting system 6 which is compatible with each other on the adjustable side wall 1 and on the supporting frame 2. The adjusting system 6 is mounted horizontally on the supporting frame 2 and on the adjustable side wall 1, perpendicular to the conveyor 22 travel axis, so as to allow the adjustable side wall 1 to move in a direction perpendicular to the travel direction of the conveyor 22 of the washing line 20. The adjusting system 6 is realized by a step-shifting arresting system, i.e. with mutually compatible locking holes and locating pins situated in a row. The adjustable side wall 1 is placed so that the narrowing of the wash area 21 corresponds to the size of the crate 25 to be washed. The crate 25 has a width of 30 cm, the width of the wash area 21, delimited by the adjustable side wall and the fixed side wall of the wash area 21, was set to 35 cm by means of the adjustable side wall. Or, the adjustable side wall 1 was hanged by putting locking pins in such locking holes to achieve the desired width of the wash area 21. Securing the adjustable side wall 1 in the selected position was realized by the arresting adjusting system 6 itself.

After the positioning side wall 1 was fixed to the supporting frame 2, the adjusting frame is removed from the washing line 20, followed by fitting of the positioning side wall 1 with the brackets 9 and other variable components. By means of a C-profile and screws, the water jets 10 are connected to the brackets 9, which are made of rods.

Thereafter, the pressurized water is connected to the water jets 10 by means of hoses and the washing line 20 is started. Due to the narrowing of the wash area 21 of the washing line 20, the crates 25 to be washed, carried by carrier pins 23 of the conveyor 22, are better fixed - lose freedom of movement to the sides. The water jets 10 are as close as possible to the crates 25 to be washed and the efficiency of washing is thus stepped up.

Then the washing line 20 is stopped, the adjustable side wall 1 is unhooked by removing locking pins from the locking holes and moved perpendicular to the conveyor travel axis so that the wash area 21 is expanded to wash 60 cm wide crates 25. The adjustable side wall 1 was again hanged on the supporting frame 2 by means of locking pins and holes and the washing line 20 was started. The 60 cm wide crates 25 were washed as effectively as crates 25 only 20 cm wide.

### Example 3

### Installation of two built-in sliding side walls

The wash area 21 of the tunnel-like washing line 20 is reinforced by stiffeners, crossbars and the upper reinforcement strip, which are an integral part of the washing line 20. If this is not the case, these stiffeners are installed in the wash area 21 of the washing line 20 prior to the installation of the built-in supporting frame 2 for the adjustable side wall 1.

The installation of the adjustable side walls 1 is preceded by the installation of an adjusting frame. The adjusting frame is placed in the wash area 21 of the washing line 20 on the upper surface of the conveyor 22 and is centered relative to the conveyor 22 travel axis. The adjusting frame, which is connected at the frame mounting point with screws, is designed to measure and attach the built-in adjustable side wall 1 or the built-in supporting frame 2 from the 'zero point', i.e. from the conveyor 22 or from the top of the carrier pin 23 of the conveyor 22.

After the adjusting frame has been mounted, the built-in supporting frame 2 is placed on its upper surface without fitting and fixed by welding to the reinforcing frame 24 of the washing line 20. The supporting frame 2 is then fitted with two opposing, adjustable side walls 1 without fitting with brackets 9 and variable components. The adjustable side walls 1 are attached to the supporting frame 2 by means of the adjusting system 6. The adjusting system 6 is a rail mounted on the supporting frame 2 and a counter-rail mounted on both positioning side walls 1 or on their bases 7, of the adjusting system 6. The rail and counter-rail are mounted horizontally on the supporting frame 2 and on the adjustable side walls 1, perpendicular to the conveyor 22 travel axis, so as to allow the adjustable side walls 1 to move in a direction perpendicular to the travel direction of the conveyor 22 of the washing line 20. Drive of the position change is provided by sliding bars which are attached to both adjustable side walls 1 and led out through the fixed side wall of the washing line 20.

After the positioning side walls 1 have been fixed to the supporting frame 2, the adjusting frame is demounted from the washing line 20, and the positioning side walls 1 are then fitted with brackets 9 for water jets 10 and for flexible segments 12. By means of a C-profile and screws, the water jets 10 are connected to the water jet 10 brackets 9, which are made of rods. The flexible segments 12 are attached to the flexible segment 12 brackets 9, which are made of open steel profiles, by means of a profile for attaching flexible segments 12 and screws with nuts. The flexible segments 12 protrude into the wash area 21 and have a pressing force acting against their deformation. Thereafter, the positioning side walls 1 are tested so that they are only moved - if there is no jamming or visible crossing of the positioning side walls 1 or the supporting frame 2 or the frame 24 of the washing line, the pressure water is connected to the water jets 10 by means of hoses. The adjustable side walls 1 are placed so that the narrowing of the wash area 21 corresponds to the size of the crate 25 to be washed. The crate 25 has a width of 40 cm, the width of the wash area 21, delimited by both adjustable side walls 1, is set to 50 cm, wherein the flexible segments 12 protrude into the wash area 21 and come into contact with the crate 25, by which they are deformed.

The adjustable side walls 1 are secured in the selected working position by means of a locking screw 8 tightened from the adjustable side wall 1 or the base of the adjusting system 6 towards the rail of the supporting frame 2, followed by a test run of the washing line 20.

Due to the narrowing of the wash area 21 of the washing line 20, the crates 25 to be washed, carried by carrier pins 23 of the conveyor 22, are better fixed - lose freedom of movement to the sides. The water jets 10 are as close as possible to the crates 25 to be washed and the efficiency of washing is thus stepped up.

### Example 4

### Positioning, locking system and the piston drive

The adjustable side wall 1 is constructed analogously to Example 2, wherein the piston 13 serves as a drive for change and at the same time as a locking system for the position of the adjustable side wall 1. This piston 13 is attached from one side to a pin 14 of the piston 13, which is welded to the flag 15. The flag 15 is screwed by means of screws, washers and self-locking nuts to the supporting frame 2 or to the reinforcing frame 24 of the washing line 20. The connection of the reinforcing frame 24 of the washing line 20 or the supporting frame 2 and the flag 15 is designed to hold right angles and to be self-locking when screwed together. This keeps the piston 13 in an axis perpendicular to the conveyor 22 travel.

At the other end, the piston 13 is attached to the supporting profile 4 of the adjustable side wall 1 by attachment 16 of the piston 13, i.e. a T-shaped bracket, a pin and a fork terminal screwed onto the piston 13, wherein the T-shaped bracket is screwed to the supporting profile 4 by means of screws, washers and self-locking nuts.

The piston 13 is connected with a compressed air hose (6-8 bar) via the piston 13 ends. The hose is led through the wall of the washing line 20 to a solenoid valve.

The piston 13 is operated by compressed air, generally controlled either manually, automatically or semi-automatically. In the case of automation, the piston 13 is controlled by an electromagnet, the control unit of the system from the switchboard, which is linked to the function of the washing line 20. The program is then most often pre-set to a small (400 x 300 mm) or large (600 x 400 mm) crate 25. Even the automatic piston 13 can be switched to a manual mode if the washing line 20 does not have the program. Switching to the manual mode is handled by a controller.

The adjustable side wall 1 is placed so that the narrowing of the wash area 21 corresponds to the size of the crate 25 to be washed. The crate 25 has a width of 20 cm; the width of the wash area 21, delimited by the adjustable side wall 1 and a static side wall of the wash area, is set to 25 cm.

The adjustable side wall 1 is secured in the selected working position by action of the piston 13 and the trial start of the washing line 20 follows.

Due to the narrowing of the wash area 21 of the washing line 20, the crates 25 to be washed, carried by carrier pins 23 of the conveyor 22, are better fixed - lose freedom of movement to the sides. The water jets 10 are as close as possible to the crates 25 to be washed and the efficiency of washing is thus stepped up.

### Example 5

### Construction of the integrated adjustable side wall

The integrated adjustable side wall 1 is made of stainless steel analogously to the standard internal wall of the washing line 20 for crates 25, with the difference that the integrated adjustable side wall has a adjusting system 6 located on the base 7 of the adjusting system 6. The adjusting system 6 may be a locking hole, locking pins, a profiled rail, a suspension sliding wheel, the stop of piston 13, a threaded rod, a hook, a C-profile. At the same time, the washing line 20 for crates 25 has a compatible adjusting system 6, i.e. a panel with holes for screwing together with the hole in the base 7 of the adjusting system 6 of the sliding side wall 1, or the panel with locking pins or locking holes to be mounted on the base 7 of the adjusting system 6, or the profiled rail compatible with the profiled rail or suspension wheel located on the adjustable side wall 1 or the profile for attaching a hook or pin 14 of the piston 13 or a threaded hole for the threaded rod.

### List of marks for terms

- 1.: Adjustable side wall
- 2.: Supporting frame
- 3.: Beam of the supporting frame 2
- 4.: Supporting profile of the adjustable side wall 1
- 5.: Supporting joint of the adjustable side wall 1
- 6.: Adjusting system of the adjustable side wall 1
- 7.: Base of the adjusting system 6
- 8.: Locking screw
- 9.: Bracket
- 10.: Jet
- 11.: Skid
- 12.: Flexible segment
- 13.: Piston
- 14.: Pin of the piston 13
- 15.: Flag
- 16.: Attachment of the piston 13
- 17.: Guide system
- 18.: Arresting system
- 20.: Washing line
- 21.: Wash area of the washing line 20
- 22.: Conveyor of the washing line 20
- 23.: Pin of the conveyor 22
- 24.: Frame of the washing line 20
- 25.: Crate
- 26.: Guide structure
- 27.: Movable mechanism
- 28.: Jet body

### Applicability in Industry

Washing lines for crates and boxes, crate fixation, increased washing line efficiency.

## Claims

1. An adjustable sidewall (1) of the inner wash area (21) of the crate (25) washing line (20) fitted with water jets (10) **characterized in that** it is parallel to an opposite side wall, mounted above the top of a carrier pin (23) or pin of a conveyor (22) of the washing line (20) to a adjusting system (6), wherein the adjusting system (6) connects it to a supporting frame (2); the supporting frame (2) is perpendicular to the adjustable side wall and parallel to the conveyor (22) of the washing line (20) and the adjusting system fixes the adjustable side wall (1) at selected distances from the opposite side wall.

2. The adjustable side wall (1) of the internal wash area (21) of the washing line (20) for crates (25), equipped with water jets (10) according to claim 1, **characterized in that** the adjusting system (6) comprises a guide system (17), wherein the guide system (17) consists of a guide structure (26), which is attached to the supporting frame (2) and is parallel to the supporting frame and a movable mechanism (27), which is attached to the movable side wall (1), and the movable mechanism is movably mounted in the guide structure (26), is horizontally movable in the guide structure, parallel to the conveyor (22) of the washing line (20).

3. The adjustable side wall (1) of the internal wash area (21) of the washing line (20) for crates (25), equipped with water jets (10) according to claim 1, **characterized in that** the guide structure (26) consists of a hollow cylinder and the guide mechanism (26) consists of a piston (13) inserted therein.

4. The adjustable side wall (1) of the internal wash area (21) of the washing line (20) for crates (25), equipped with water jets (10) according to claim 2, **characterized in that** the guide system (17) is connected to a linear horizontal drive.

5. The adjustable side wall (1) of the internal wash area (21) of the washing line (20) for crates (25), equipped with water jets (10) according to claim 4, **characterized in that** the linear horizontal drive is connected to the adjustable side wall (1) and fixed to the supporting frame (2).

6. The adjustable side wall (1) of the internal wash area (21) of the washing line (20) for crates (25), equipped with water jets (10) according to claim 1, **characterized in that** the adjusting system (6) comprises an arresting system (18), wherein the arresting system (18) consists of a demountable joint which is situated between the adjustable side wall (1) and the supporting frame (2).

7. The adjustable side wall (1) of the internal wash area (21) of the washing line (20) for crates (25), equipped with water jets (10) according to claim 2, **characterized in that** the guide system (17) consists of a rail situated on the supporting frame (2) and parallel to the supporting frame (2), and a movable mechanism situated on the adjustable side wall (1), wherein the movable mechanism is mounted on the rail.

8. The adjustable side wall (1) of the internal wash area (21) of the washing line (20) for crates (25), equipped with water jets (10) according to claim 14, **characterized in that** the movable mechanism consists of a C-profile, which is mounted on the rail.

9. The adjustable side wall (1) of the internal wash area (21) of the washing line (20) for crates (25), equipped with water jets (10) according to claim 14, **characterized in that** the movable mechanism consists of a counter-rail.

10. The adjustable side wall (1) of the internal wash area (21) of the washing line (20) for crates (25), equipped with water jets (10) according to claim 14, **characterized in that** the movable mechanism consists of suspension wheels.

11. The adjustable side wall (1) of the internal wash area (21) of the washing line (20) for crates (25), equipped with water jets (10) according to claim 1, **characterized in that** it is made of metal profiles.

12. The adjustable side wall (1) of the internal wash area (21) of the washing line (20) for crates (25), equipped with water jets (10) according to claim 1, **characterized in that** it is fitted with side skids (11).

13. The adjustable side wall (1) of the internal wash area (21) of the washing line (20) for crates (25), equipped with water jets (10) according to claim 20, **characterized in that** the water jets (10) are mounted separately on the adjustable side wall (1).

14. The adjustable side wall (1) of the internal wash area (21) of the washing line (20) for crates (25), equipped with water jets (10) according to claim 1, **characterized in that** the water jets (10) are located on the adjustable side wall (1) in a jet body (28).

15. The adjustable side wall (1) of the internal wash area (21) of the washing line (20) for crates (25), equipped with water jets (10) according to claim 22, **characterized in that** the jet body (28) is provided with a hollow space and at least one supply hose, wherein the jet body (28) has more water jets (10) than supply hoses.
